# EUROPEAN PATENT SPECIFICATION

(11) **EP 2 635 799 B1**
(45) Date of publication and mention of the grant of the patent: **06.04.2016**
(21) Application number: 11838317.3
(22) Date of filing: 18.10.2011
(51) Int. Cl.: F02N 11/08, B60L 11/14, B60R 16/03

(54) **ACTIVATION DEVICE AND ACTIVATION METHOD FOR A DUAL-BATTERY SYSTEM**
AKTIVIERUNGSVORRICHTUNG UND AKTIVIERUNGSVERFAHREN FÜR EIN SYSTEM MIT ZWEI BATTERIEN
DISPOSITIF D'ACTIVATION ET PROCÉDÉ D'ACTIVATION POUR UN SYSTÈME À DOUBLE BATTERIE

(30) Priority: 01.11.2010 SE 1051140
(43) Date of publication of application: 11.09.2013
(73) Proprietor: Scania CV AB, 151 87 Södertälje (SE)
(72) Inventor: LEDFELT, Gunnar, S-155 91 Nykvarn (SE)
(74) Representative: Scania CV AB
(86) International application number: PCT/SE2011/051243
(87) International publication number: WO 2012/060766

(56) References cited:
- WO-A1-2009/099383
- WO-A1-2009/099383
- DE-A1-102004 016 292
- DE-A1-102007 016 196
- US-A1- 2005 285 559
- US-A1- 2006 097 577
- US-A1- 2006 201 724
- US-A1- 2009 056 661
- US-B1- 6 275 001
- US-B1- 6 545 445
- US-B1- 6 545 445

## Description

### Field of the invention

The present invention relates generally to the starting of vehicles and in particular to use of energy from a dual-battery system when setting a vehicle running.

### Background to the invention

Engines of various kinds are used for the propulsion of vehicles. Starting an engine often involves using an electric starter motor to set the engine running until it can run by itself. A starter motor is usually powered by a chargeable starter battery.

A usual type of starter battery is a so-called SLI (starting, lighting, ignition) battery which powers the vehicle's starter motor, headlamps and ignition system. The driver sets the starter motor running by activating the ignition lock in the vehicle, e.g. by turning the ignition key.

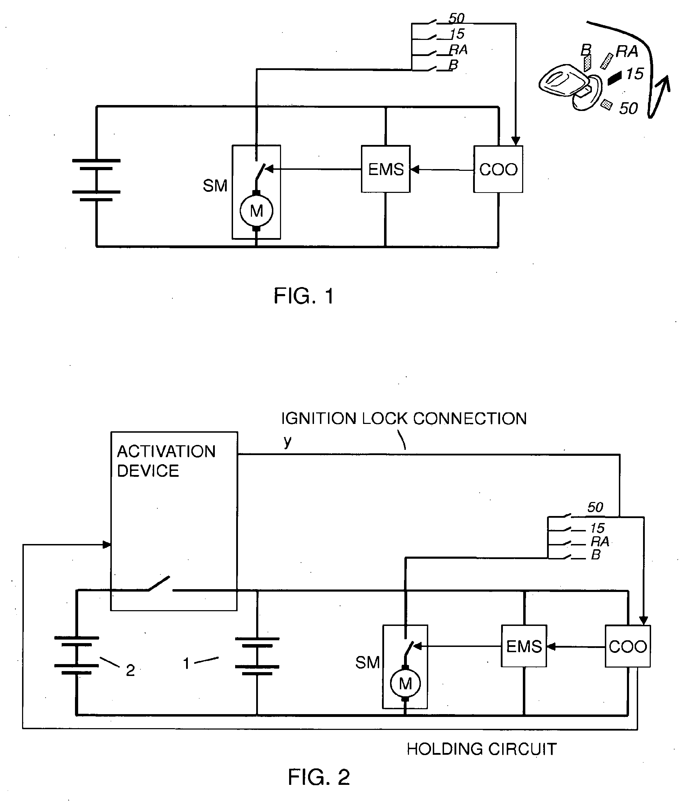

Figure 1 depicts use of an ignition lock in a traditional starter circuit. "SM" in the diagram stands for starter motor, comprising a circuit-breaker and an electric motor which is designated "M", "EMS" stands for engine management system and "COO" for coordinator. The starter motor is set running by closing its circuit-breaker. When the starter motor is running, the engine can be started. The ignition lock circuit is connected to a battery system, here two batteries connected in series. The extreme right of the diagram illustrates the vehicle's ignition lock and the various possible positions of the ignition key. B denotes off position, RA radio position, 15 ignition position and 50 start position, i.e. connection of the starter motor. In the ignition lock circuit these positions are depicted as connectable circuit-breakers. Activating the ignition lock circuit is effected here by turning the ignition key to the start position. The ignition lock circuit is thus closed, so the coordinator unit receives a signal from it. The coordinator unit then sends a control signal to the EMS unit which then switches the circuit of the starter motor so that the starter motor receives energy from the batteries.

Today's vehicles have many applications supplied with energy via the vehicle's generator and battery. When the engine is switched off and the generator can therefore not provide energy, applications which require it have to be powered from the batteries. This entails risk of so much energy from the batteries being consumed that their remaining energy is not sufficient for starting the vehicle's engine.

To solve this problem it is possible to have a battery which is primarily used to energise the starter motor and the systems which are needed for engine starting, and a power battery which is primarily used to supply applications in the vehicle. An example of such a battery system is a so-called "dual-battery system".

EP 1137150 describes a dual-battery system which comprises a starter battery, a power battery and a connecting element. Via a battery control device the connecting element can be controlled so that the flow of current from the batteries to a load is regulated according to the operating conditions.

US 5316868 describes a switch device in a dual-battery system for switching the batteries as necessary. For example, when the primary battery cannot provide sufficient current for starting the vehicle and the extra battery has to be connected, this can be effected automatically.

US 6229279 describes a dual-battery system and a method for controlling it which includes determining the charge balance between the starter battery and the power battery. The system comprises an electrically controlled switch, e.g. an MOSFET, which becomes active when a charging current can flow from the power battery to the starter battery.

US 2005285559 describes a switchable dual-battery system. The system is switchable between an ON state when the engine is running, an OFF state when the engine is switched off and a START state in which parts of the system need energising. There are between the two batteries a switch and a control device for opening the switch when the system is in OFF mode.

DE 102004016292 describes a circuit arrangement comprising an electrical energy storage device with a switch for connecting capacitor and battery to starter motor and/or generator. The capacitor is used for managing high currents of short duration from the starter motor.

A common feature of the techniques cited above is that they use a circuit-breaker of some kind between the starter battery and the power battery to control the flow of energy from them. A circuit-breaker in a dual-battery system may for example be activated electrically. Where it is electrically controlled, the circuit which controls the activation of the circuit-breaker has to be supplied with current.

The object of the invention is to propose an improved way of activating a circuit-breaker in a dual-battery system which in particular functions even when the power battery system is depleted.

### Summary of the invention

The object described above is achieved by a dual battery system comprising an activation device with a circuit-breaker unit. The dual-battery system comprises a power battery system connected to an electrical system comprising a starter motor and an ignition lock circuit for a vehicle, and a starter battery system adapted to being connected in parallel with said power battery system via said circuit-breaker unit which is switchable between an open state and a closed state, in which latter state said starter battery system is adapted to supplying said electrical system with energy and also to receiving charging current. The activation device further comprises a control unit adapted to switching said circuit-breaker unit between said open and closed states, a signal unit adapted to generating a voltage signal y₁ and to conveying a voltage signal y via an ignition lock connection to said ignition lock circuit, a monitoring unit adapted to monitoring a voltage signal y from said ignition lock connection and to generating a monitoring signal on the basis of said voltage signal y monitored, and a processor unit adapted to comparing the monitoring signal with at least one predetermined detection criterion and to generating on the basis of said comparison a control signal which is conveyed to said control unit, which is adapted to switching said circuit-breaker unit on the basis of said control signal.

The object is achieved according to another aspect by a method for activation of a circuit-breaker unit in a dual-battery system. Said dual-battery system comprises a power battery system connected to an electrical system comprising a starter motor and an ignition lock circuit for a vehicle, and a starter battery system adapted to being connected in parallel with said power battery system via said circuit-breaker unit which can be regulated between an open state and a closed state, in which latter state said starter battery system is adapted to supplying said electrical system with energy and also to receiving charging current. The method further comprises
- generating a voltage signal y₁ and conveying a voltage signal y via an ignition lock connection to said ignition lock circuit,
- monitoring a voltage signal y from said ignition lock connection and generating a monitoring signal on the basis of said voltage signal y monitored,
- comparing the monitoring signal with at least one predetermined detection criterion and generating a control signal on the basis of said comparison,
- switching said circuit-breaker unit on the basis of said control signal.

The invention makes the dual-battery system independent of the charge state of the power batteries for starting the vehicle. The driver can start the vehicle without any special measures, by turning the ignition key as usual. Nor does the ignition lock need any modification.

Only one conductor is necessary between the activation device and the ignition lock, reducing the number of components needed. The system may also be made less sensitive to malfunctions by careful choice of y₁ and output resistance Rᵤₜ.

Preferred embodiments are described in the dependent claims and the detailed description.

### Brief description of the attached drawings

The invention is described below with reference to the attached drawings, in which:
Figure 1 illustrates a system for starting a vehicle with no dual-battery system.
Figure 2 illustrates an activation device according to the invention, connected in a dual-battery system.
Figure 3 depicts an activation device according to an embodiment of the invention.
Figure 4 is a diagram of the voltage signals y₁ and y and what happens when the ignition lock is switched to its 50 position.
Figure 5 is a flowchart for an activation method according to the invention.

### Detailed description of preferred embodiments of the invention

Figure 2 depicts an activation device connected to a dual-battery system and an ignition lock circuit. It shows the activation device as a separate unit but it is also conceivable for the activation device to be part of a coordinator unit COO which also appears in the diagram.

The activation device comprises a circuit-breaker unit for a dual-battery system. The dual-battery system comprises a power battery system 1 connected to an electrical system comprising a starter motor SM and an ignition lock circuit for a vehicle. The dual-battery system comprises also a starter battery system 2 adapted to being connected in parallel with the power battery system 1 via the circuit-breaker unit. The circuit-breaker unit is switchable between an open state and a closed state, in which latter state the starter battery system is adapted to supplying the electrical system with energy and preferably also to receiving charging current. As previously explained with reference to Figure 1, the ignition lock circuit comprises a control which can be operated by, for example, turning a key. In Figure 2, "50" is the position which closes the ignition lock circuit to start the starter motor. This is called the start position and is therefore an existing unit in an ignition lock. The electrical system also comprises according to an embodiment a coordinator unit COO and an EMS unit. Figure 2 shows the coordinator unit connected to the start position of the ignition lock circuit and also to the EMS unit. Both units are connected to and supplied with energy via the dual-battery system. If the power battery system 1 is not depleted, the coordinator unit and the EMS unit can be supplied with energy via it. If the power battery system 1 is depleted, these units have to be supplied with energy via the starter battery system 2 to set the starter motor running. The circuit-breaker unit has then to be in its closed state. The coordinator unit also comprises according to an embodiment an input resistance Rᵢₙ (not depicted in the drawings).

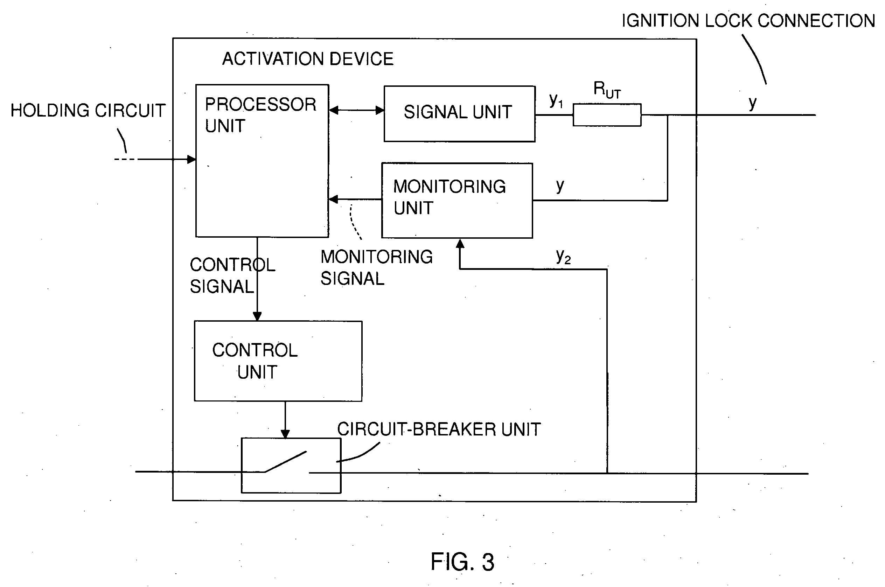

The activation device will now be explained in more detail with reference to Figure 3. As depicted in the diagram, it comprises a control unit adapted to switching the circuit-breaker unit between said open and closed states, and a signal unit adapted to generating a voltage signal y₁ and to conveying a voltage signal y via an ignition lock connection to said ignition lock circuit. The ignition lock connection comprises for example a cable between the signal unit and the ignition lock circuit's start position depicted in Figure 2 as the "50" position. The activation device may also comprise an output resistance Rᵤₜ which is connected to the signal unit and which can be used to achieve desired voltage levels. The voltage y₁ is thus delivered via Rᵤₜ on the ignition lock connection and is distributed over resistances on the circuit, here exemplified as the output resistance Rᵤₜ and the input resistance Rᵢₙ in the coordinator unit, when the start position is operative. One or both of the resistances may instead, according to an embodiment, be impedances.

The activation device further comprises a monitoring unit adapted to monitoring a voltage signal y from said ignition lock connection and to generating a monitoring signal on the basis of said voltage signal y monitored. When the start position becomes operative, y will therefore change, which is monitored by the monitoring unit. The voltage signal y is preferably monitored somewhere on the ignition lock connection between said output resistance Rᵤₜ and said ignition lock circuit. A processor unit in the activation device is further adapted to comparing the monitoring signal with at least one predetermined detection criterion and to generating on the basis of said comparison a control signal which is conveyed to said control unit which is itself adapted to switching said circuit-breaker unit on the basis of the control signal. The activation device can thus monitor whether the start position is engaged, in which case the circuit-breaker unit will remain closed. The electrical system then receives energy from the starter battery system, and the energy supply to the starter motor can be switched so that the starter motor can be set running.

The activation device is preferably adapted to being energised from the starter battery system. This makes it possible to verify that the activation device always has enough energy to perform its functions, supposing that the starter battery system is not depleted.

When the activation device detects that the ignition lock circuit has closed, it preferably generates, as explained below, a control signal which closes the circuit-breaker between the starter battery system and the power battery system. For the activation device to detect that the ignition lock circuit has closed, the processor unit compares the monitoring signal with at least one predetermined detection criterion. According to an embodiment, a detection criterion comprises the monitoring signal differing from a predetermined signal value, and if the detection criterion is fulfilled the processor unit is adapted to generating a control signal for the circuit-breaker unit to close. The signal unit therefore delivers a voltage to the ignition lock circuit via the ignition lock connection, and when the start position becomes operative the voltage on the ignition lock connection will change because the load changes. The activation device monitors this change by monitoring the voltage from the ignition lock connection and generating a monitoring signal. According to this embodiment, the processor unit then compares the monitoring signal with, for example, a predetermined signal value or range, and if the monitoring signal differs from the predetermined signal value or range, then a control signal for the circuit-breaker to be closed is generated. The predetermined signal value may for example be a signal value received by the processor unit from the signal unit, based on the voltage delivered by the signal unit. The range may for example be a certain range of amplitude about a signal value which the processor unit receives from the signal unit.

When the circuit-breaker closes, current can then flow from the starter battery system to the electrical system. When the circuit-breaker unit is closed, the coordinator unit COO therefore receives energy from the starter battery system 2 and can send a control signal to the EMS unit which switches the power supply to the starter motor SM so that the latter can be set running.

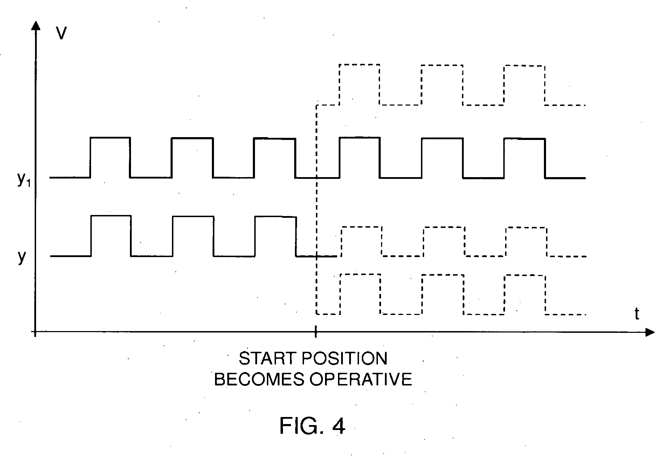

According to an embodiment, said voltage signal y₁ comprises an a.c. voltage. If the voltage signal y₁ is a d.c. voltage and the power battery system 1 is greatly depleted, there is risk of the voltage across the power battery system 1 coinciding with the voltage of the signal y. This would lead to no change being detected when the start position becomes operative, and hence to the activation device not sending any control signal to the circuit-breaker unit. This situation is avoided by using an a.c. voltage whereby the amplitude varies alternately. Figure 4 illustrates in a.c. form the voltage y₁ generated and delivered. It also shows the a.c. voltage y, which has thus been decimated from y₁ by being distributed over the circuit's respective resistances Rᵤₜ and Rᵢₙ. When the start position becomes operative, the voltage y on the ignition lock connection changes, e.g. according to either of the broken lines in the diagram. The new voltage level depends for example on the energy level in the power batteries 1. This change is detected by the activation device.

The voltage signal y has according to an embodiment an amplitude of between 0.1 mV and 30% of the power battery system's voltage capacity. If the amplitude is below 0.1 mV there is risk of the signal being disturbed from nearby components. 30% of the capacity of the power battery system means about 7V in a 24 volt system or about 3.6 V in a 12 volt system. If the respective amplitude is above these values, the voltage signal from the signal unit may contribute to unintended triggering of the coordinator's start signal. The coordinator may then interpret the voltage signal as a triggering signal and generate a start signal to the EMS unit.

According to an embodiment, the monitoring unit is adapted to monitoring a voltage signal y₂ from said power battery system, and the processor unit is adapted to comparing the voltage signal y₂ with a predetermined threshold value T_{y2} and, if said voltage signal y₂ is greater than or equal to the threshold value T_{y2}, to deactivating said signal unit so that no first voltage signal y₁ is generated. This makes it possible to limit the consumption of energy from the starter batteries. The monitoring unit is preferably adapted to generating on the basis of said voltage signal y₂ monitored a monitoring signal which is conveyed to the processor unit. Figure 3 depicts a connection between the power battery system and the monitoring unit via which y₂ is obtained. The threshold value T_{y2} is for example a value which represents the smallest voltage level which is high enough to energise the electrical system. The monitoring unit may however still monitor the occurrence of a change in the voltage signal on the ignition lock connection when the start position becomes operative, and the circuit-breaker unit may thus be activated to enable energy to be obtained from the starter battery system.

The control unit comprises according to an embodiment a timer unit adapted to measuring the period of time t for which the circuit-breaker unit is closed, and when the time t exceeds a predetermined threshold value Tₜ the control unit is adapted to switching said circuit-breaker unit to an open state. The circuit-breaker unit is thus only closed for a predetermined period of time and there is no risk of the starter battery system becoming depleted of energy. The circuit-breaker might therefore also be switched to open state when for example no control signal has been generated from the coordinator unit for the circuit-breaker to open (see explanation below), e.g. because of unsuccessful starting.

Examples of a holding circuit from the coordinator unit to the activation device are also depicted in Figure 2 and partly in Figure 3. According to an embodiment, the coordinator unit is adapted to causing the circuit-breaker to remain closed until charging of the starter batteries is completed. This makes it possible for the starter batteries to be recharged. This may for example be done by the coordinator unit sending control signals to the processor unit, the control unit or directly to the circuit-breaker unit in the activation device.

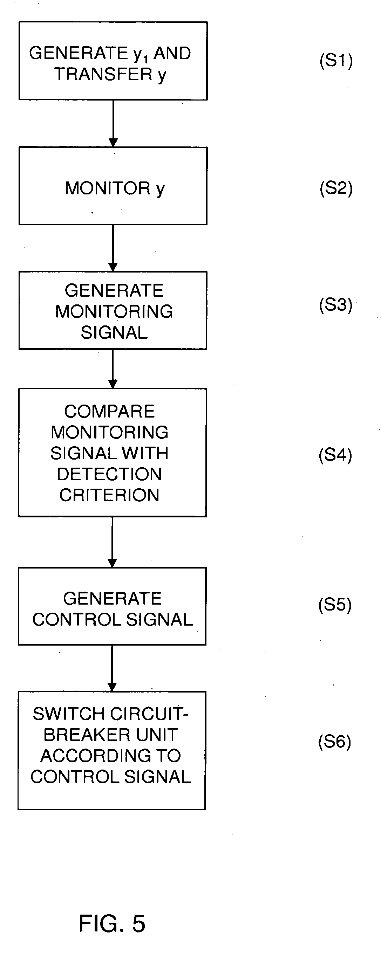

The invention comprises also a method for activation of a circuit-breaker unit in a dual-battery system, as illustrated in Figure 5. The dual-battery system was explained previously in relation to the activation device. The method comprises a first step S1 of generating a voltage signal y₁ and conveying a voltage signal y via an ignition lock connection to said ignition lock circuit. As a next step S2, a voltage signal y from said ignition lock connection is monitored and serves as a basis for generating a monitoring signal as a third step S3. As a fourth step S4, the monitoring signal is compared with at least one predetermined detection criterion. On the basis of the comparison, a control signal is then generated as step S5. As step S6 said circuit-breaker unit is then switched on the basis of the control signal. This makes it possible for a circuit-breaker unit to be activated where necessary to enable energy to be obtained from the starter batteries, e.g. when a vehicle being started up needs energy to set the starter motor running. The system thus will not be affected by whether the power batteries are depleted or not.

According to an embodiment, the method comprises a detection criterion about whether the monitoring signal differs from a predetermined signal value, and if the criterion is fulfilled the circuit-breaker unit is switched to closed state. This makes it possible for the circuit-breaker unit to close if for example the start position in the ignition lock circuit has become operative and the load of the circuit changes, resulting in a changed voltage signal on the ignition lock connection.

According to another embodiment, the method comprises monitoring a voltage signal y₂ from said power battery system, comparing it with a predetermined threshold value T_{y2} and deactivating said signal unit if y₂ is greater than or equal to the threshold value T_{y2}, so that no first voltage signal y₁ is generated. There is therefore no need to deliver a voltage signal y₁ if there is sufficient energy in the power battery system to energise the various units of the electrical system.

To achieve desired voltage levels on the ignition lock connection, the activation device comprises according to an embodiment an output resistance Rᵤₜ connected via said ignition lock connection. The method according to this embodiment comprises monitoring the voltage signal y somewhere on the ignition lock connection between said output resistance Rᵤₜ and said ignition lock circuit.

According to an embodiment, the method comprises measuring the period of time t for which the circuit-breaker unit is closed and switching it to an open state when the time t exceeds a predetermined threshold value Tₜ. This means that no more energy than necessary is taken from the starter battery system.

The invention comprises also a computer programme product comprising instructions for enabling a computer system in a vehicle to perform steps according to the above method when those instructions are run on said computer system. The invention comprises also a computer programme product in which the instructions are stored on a medium which can be read by a computer system.

The present invention is not restricted to the embodiments described above. Sundry alternatives, modifications and equivalents may be used. The aforesaid embodiments therefore do not limit the invention's scope which is defined by the attached claims.

## Claims

1. A dual battery system comprising an activation device with a circuit-breaker unit, which system comprises
- a power battery system (1) connected to an electrical system comprising a starter motor (SM) and an ignition lock circuit for a vehicle, and
- a starter battery system (2) adapted to being connected in parallel with said power battery system (1) via said circuit-breaker unit, which circuit-breaker unit is switchable between an open state and a closed state, in which latter state said starter battery system (2) is adapted to supplying said electrical system with energy, **characterised in that** the activation device comprises
- a control unit adapted to switch said circuit-breaker unit between said open and closed states;
- a signal unit adapted to generate a voltage signal y₁ and conveying a voltage signal y via an ignition lock connection to said ignition lock circuit,
- a monitoring unit adapted to monitor a voltage signal y from said ignition lock connection and generating a monitoring signal on the basis of said voltage signal y monitored, and
- a processor unit adapted to compare the monitoring signal with at least one predetermined detection criterion and generating on the basis of said comparison a control signal which is conveyed to said control unit which is adapted to switching said circuit-breaker unit on the basis of said control signal.

2. An activation device according to claim 1, whereby a detection criterion comprises the monitoring signal differing from a predetermined signal value, and the processor unit is adapted to generate a control signal for the circuit-breaker unit to close if the detection criterion is fulfilled.

3. An activation device according to either of claims 1 and 2, whereby said voltage signal y₁ comprises an a.c. voltage.

4. An activation device according to claim 3, whereby said voltage signal y has an amplitude of between 0.1 mV and 30% of the voltage capacity of the power battery system.

5. An activation device according to any one of claims 1 to 4, whereby the monitoring unit is adapted to monitor a voltage signal y₂ from said power battery system (1), and the processor unit is adapted to compare the voltage signal y₂ with a predetermined threshold value T_{y2} and, if said voltage signal y₂ is greater than or equal to the threshold value T_{y2}, to deactivate said signal unit so that no first voltage signal y₁ is generated.

6. An activation device according to any one of claims 1 to 4, which comprises an output resistance (Rᵤₜ).

7. An activation device according to claim 6, whereby the voltage signal y is monitored somewhere on the ignition lock connection between said output resistance (Rᵤₜ) and said ignition lock circuit.

8. An activation device according to any one of claims 1 to 7, whereby the control unit comprises a timer unit adapted to measuring the period of time t for which the circuit-breaker unit is closed and, when the time t exceeds a predetermined threshold value Tₜ, to switching said circuit-breaker unit to an open state.

9. An activation device according to any one of the claims 1 to 8, whereby the activation device is adapted to be energised from the starter battery system.

10. A method for activating a circuit-breaker unit in a dual-battery system, which system comprises a power battery system (1) connected to an electrical system comprising a starter motor (SM) and an ignition lock circuit for a vehicle, and a starter battery system (2) adapted to be connected in parallel with said power battery system (1) via said circuit-breaker unit, which circuit-breaker unit is switchable between an open state and a closed state, in which latter state said starter battery system (2) is adapted to supply said electrical system with energy,
**characterised in that** the method comprises
- generating a voltage signal y₁ and conveying a voltage signal y via an ignition lock connection to said ignition lock circuit,
- monitoring a voltage signal y from said ignition lock connection and generating a monitoring signal on the basis of said voltage signal y monitored,
- comparing the monitoring signal with at least one predetermined detection criterion and generating a control signal on the basis of said comparison, and
- switching said circuit-breaker unit on the basis of said control signal.

11. A method according to claim 10, whereby a detection criterion comprises the monitoring signal differing from a predetermined signal value, and if the detection criterion is fulfilled, the circuit-breaker unit is switched to closed state.

12. A method according to claim 10 or 11, whereby said voltage signal y₁ comprises an a.c. voltage.

13. A method according to any one of claims 10 to 12, which comprises monitoring a voltage signal y₂ from said power battery system (1) , comparing it with a predetermined threshold value T_{y2} and, if said voltage signal y₂ is greater than or equal to the threshold value T_{y2}, deactivating said signal unit so that no first voltage signal y₁ is generated.

14. A method according to any one of claims 10 to 13, which comprises measuring the period of time t for which the circuit-breaker unit is closed, and switching said circuit-breaker unit to an open state when the time t exceeds a predetermined threshold value Tₜ.

15. A computer programme product comprising computer programme instructions for enabling a computer system in a vehicle to perform steps according to the method of any of claims 10 to 14 when those instructions are run on said computer system.

16. A computer programme product according to claim 15, in which the computer programme instructions are stored on a medium which can be read by a computer system.

## Patentansprüche

1. System mit zwei Batterien, umfassend eine Aktivierungsvorrichtung mit einer Schutzschaltereinheit, wobei das System umfasst:
- ein Batterieversorgungssystem (1), das mit einem elektrischen System verbunden ist, das einen Anlasser (SM) und einen Zündschlossschaltkreis für ein Fahrzeug umfasst, und
- ein Anlasserbatteriesystem (2), das dazu ausgebildet ist, parallel mit dem Batterieversorgungssystem (1) über die Schutzschaltereinheit verbunden zu sein, wobei die Schutzschaltereinheit zwischen einem offenen und geschlossenen Zustand umgeschaltet werden kann, wobei im letzteren Zustand das Anlasserbatteriesystem (2) dazu ausgebildet ist, das elektrische System mit Energie zu versorgen, **dadurch gekennzeichnet, dass** die Aktivierungsvorrichtung umfasst:
- eine Steuereinheit, die dazu ausgebildet ist, die Schutzschaltereinheit zwischen dem offenen und geschlossenen Zustand zu schalten;
- eine Signaleinheit, die dazu ausgebildet ist, ein Spannungssignal y₁ zu erzeugen und ein Spannungssignal y über eine Zündschlossverbindung zu dem Zünd-schlossschaltkreis zu übertragen,
- eine Überwachungseinheit, die dazu ausgebildet ist, ein Spannungssignal y von der Zündschlossverbindung zu überwachen und ein Zustandssignal basierend auf dem überwachten Spannungssignal y zu erzeugen, und
- eine Prozessoreinheit, die dazu ausgebildet ist, das Zustandssignal mit wenigstens einem vorbestimmten Detektionskriterium zu vergleichen und basierend auf dem Vergleich ein Steuersignal zu erzeugen, welches zu der Steuereinheit übertragen wird, welche dazu ausgebildet ist, die Schutzschaltereinheit basierend auf dem Steuersignal zu schalten.

2. Aktivierungsvorrichtung nach Anspruch 1, wobei ein Detektionskriterium das Zustandssignal, das sich von einem vorbestimmten Signalwert unterscheidet und die Prozessoreinheit umfasst, die dazu ausgebildet ist, ein Steuersignal zum Schließen der Schutzschaltereinheit zu generieren, wenn das Detektionskriterium erfüllt ist.

3. Aktivierungsvorrichtung nach einem der Ansprüche 1 oder 2, wobei das Spannungssignal y₁ eine AC Spannung umfasst.

4. Aktivierungsvorrichtung nach Anspruch 3, wobei das Spannungssignal y eine Amplitude zwischen 0,1 mV und 30% der Spannungskapazität des Batterieversorgungssystems aufweist.

5. Aktivierungsvorrichtung nach einem der Ansprüche 1 bis 4, wobei die Überwachungseinheit dazu ausgebildet ist, ein Spannungssignal y₂ von dem Batterieversorgungssystem (1) zu überwachen, und die Prozessoreinheit dazu ausgebildet ist, das Spannungssignal y₂ mit einem vorbestimmten Schwellwert T_{y2} zu vergleichen und, wenn das Spannungssignal y₂ größer oder gleich dem Schwellwert T_{y2} ist, die Signaleinheit zu deaktivieren, so dass kein erstes Spannungssignal y₁ generiert wird.

6. Aktivierungsvorrichtung nach einem der Ansprüche 1 bis 4, welche einen Ausgangswiderstand (Rᵤₜ) umfasst.

7. Aktivierungsvorrichtung nach Anspruch 6, wobei das Spannungssignal y irgendwo auf der Zündschlossverbindung zwischen dem Ausgangswiderstand (Rᵤₜ) und der Zündschlossschaltung überwacht wird.

8. Aktivierungsvorrichtung nach einem der Ansprüche 1 bis 7, wobei die Steuereinheit eine Zeitschalteinheit umfasst, die dazu ausgebildet ist, die Zeitdauer T zu messen für die die Schutzschaltereinheit geschlossen ist und, wenn die Zeit T einen vorbestimmten Schwellwert Tₜ übersteigt, die Schutzschaltereinheit in einen offenen Zustand zu schalten.

9. Aktivierungsvorrichtung nach einem der Ansprüche 1 bis 8, wobei die Aktivierungsvorrichtung dazu ausgebildet ist, von dem Anlasserbatteriesystem mit Energie versorgt zu werden.

10. Verfahren zum Aktivieren einer Schutzschaltereinheit in einem System mit zwei Batterien, wobei das System ein Batterieversorgungssystem (1) umfasst, das mit einem elektrischen System, umfassend einen Anlasser (SM) und einem Zündschlossschaltkreis für ein Fahrzeug, verbunden ist, und ein Anlasserbatteriesystem (2), das dazu ausgebildet ist, parallel mit dem Batterieversorgungssystem (1) über die Schutzschaltereinheit verbunden zu sein, wobei die Schutzschaltereinheit zwischen einem offenen Zustand und einem geschlossenen Zustand umgeschaltet werden kann, wobei im letzteren Zustand das Anlasserbatteriesystem (2) dazu ausgebildet ist, das elektrische System mit Energie zu versorgen, **dadurch gekennzeichnet, dass** das Verfahren umfasst:
- Erzeugen eines Spannungssignals y₁ und Übertragen eines Spannungssignals y über eine Zündschlossverbindung zu dem Zündschlossschaltkreis,
- Überwachen eines Spannungssignals y von der Zündschlossverbindung und Erzeugen eines Zustandssignals basierend auf dem überwachten Spannungssignal y,
- Vergleichen des Zustandssignals mit mindestens einem vorbestimmten Detektionskriterium und Erzeugen eines Steuersignals basierend auf dem Vergleich, und
- Schalten der Schutzschaltereinheit basierend auf dem Steuersignal.

11. Verfahren nach Anspruch 10, wobei ein Detektionskriterium das Zustandssignal umfasst, das sich von einem vorbestimmten Signalwert unterscheidet, und wenn das Detektionskriterium erfüllt ist, die Schutzschaltereinheit in einen geschlossenen Zustand geschaltet wird.

12. Verfahren nach Anspruch 10 oder 11, wobei das Spannungssignal y₁ eine AC Spannung umfasst.

13. Verfahren nach einem der Ansprüche 10 bis 12, ferner umfassend Überwachen eines Spannungssignals y₂ von dem Batterieversorgungssystem (1), Vergleichen dieses mit einem vorbestimmten Schwellwert T_{y2} und, wenn das Spannungssignal y₂ größer oder gleich dem Schwellwert T_{y2} ist, Deaktivieren der Signaleinheit, so dass kein erstes Spannungssignal y₁ erzeugt wird.

14. Verfahren nach einem der Ansprüche 10 bis 13, ferner umfassend Messen der Zeitdauer T, für welche die Schutzschaltereinheit geschlossen ist, und Schalten der Schutzschaltereinheit in einen offenen Zustand, wenn die Zeit T einen vorbestimmten Schwellwert Tₜ überschreitet.

15. Computerprogrammprodukt umfassend Computerprogrammanweisungen zum Aktivieren eines Computersystems in einem Fahrzeug, um Schritte entsprechend dem Verfahren nach einem der Ansprüche 10 bis 14 auszuführen, wenn diese Anweisungen auf dem Computersystem ausgeführt werden.

16. Computerprogrammprodukt nach Anspruch 15, wobei die Computerprogrammanweisungen auf einem Medium gespeichert sind, welches durch ein Computersystem gelesen werden kann.

## Revendications

1. Système de double batterie, comprenant un dispositif d'activation avec une unité de coupe-circuit, ce système comprenant :
- un système de batterie de puissance (1) connecté à un système électrique comprenant un moteur de démarreur (SM) et un circuit de verrouillage d'allumage pour un véhicule, et
- un système de batterie de démarrage (2) adapté de façon à être connecté en parallèle audit système de batterie de puissance (1) par l'intermédiaire de ladite unité de coupe-circuit, cette unité de coupe-circuit pouvant être commutée entre un état ouvert et un état fermé, et, dans ce dernier état, ledit système de batterie de démarrage (2) étant adapté de façon à délivrer de l'énergie audit système électrique, **caractérisé en ce que** le dispositif d'activation comprend :
- une unité de commande adaptée de façon à commuter ladite unité de coupe-circuit entre lesdits états ouvert et fermé ;
- une unité de signal adaptée de façon à générer un signal de tension y₁ et à acheminer un signal de tension y, par l'intermédiaire d'une connexion de verrouillage d'allumage, vers ledit circuit de verrouillage d'allumage ;
- une unité de contrôle adaptée de façon à contrôler un signal de tension y venant de ladite connexion de verrouillage d'allumage et à générer un signal de contrôle en fonction dudit signal de tension y contrôlé, et
- une unité de processeur adaptée de façon à comparer le signal de contrôle à au moins un critère de détection prédéterminé et à générer, en fonction de ladite comparaison, un signal de commande qui est acheminé vers ladite unité de commande, qui est adaptée de façon à commuter ladite unité de coupe-circuit en fonction dudit signal de commande.

2. Dispositif d'activation selon la revendication 1, grâce auquel un critère de détection comprend le fait que le signal de contrôle diffère d'une valeur de signal prédéterminée, et l'unité de processeur étant adaptée de façon à générer un signal de commande pour la fermeture de l'unité de coupe-circuit si le critère de détection est satisfait.

3. Dispositif d'activation selon l'une ou l'autre des revendications 1 et 2, grâce auquel ledit signal de tension y₁ comprend une tension alternative.

4. Dispositif d'activation selon la revendication 3, grâce auquel ledit signal de tension y a une amplitude comprise entre 0,1 mV et 30% de la capacité de tension du système de batterie de puissance.

5. Dispositif d'activation selon l'une quelconque des revendications 1 à 4, grâce auquel l'unité de contrôle est adaptée de façon à contrôler un signal de tension y₂ venant dudit système de batterie de puissance (1), et l'unité de processeur est adaptée de façon à comparer le signal de tension y₂ à une valeur de seuil prédéterminée T_{y2}, et, si ledit signal de tension y₂ est supérieur ou égal à la valeur de seuil T_{y2}, à désactiver ladite unité de signal, de telle sorte qu'aucun premier signal de tension y₁ ne soit généré.

6. Dispositif d'activation selon l'une quelconque des revendications 1 à 4, qui comprend une résistance de sortie (Rᵤₜ).

7. Dispositif d'activation selon la revendication 6, grâce auquel le signal de tension y est contrôlé quelque part sur la connexion de verrouillage d'allumage entre ladite résistance de sortie (Rᵤₜ) et ledit circuit de verrouillage d'allumage.

8. Dispositif d'activation selon l'une quelconque des revendications 1 à 7, grâce auquel l'unité de commande comprend une unité de minuteur adaptée de façon à mesurer la période de temps t pendant laquelle l'unité de coupe-circuit est fermée, et, lorsque le temps t dépasse une valeur de seuil prédéterminée Tₜ, à commuter ladite unité de coupe-circuit dans un état ouvert.

9. Dispositif d'activation selon l'une quelconque des revendications 1 à 8, grâce auquel le dispositif d'activation est adapté de façon à être alimenté à partir du système de batterie de démarrage.

10. Procédé pour activer une unité de coupe-circuit dans un système de double batterie, ce système comprenant un système de batterie de puissance (1) connecté à un système électrique comprenant un moteur de démarreur (SM) et un circuit de verrouillage d'allumage pour un véhicule, et un système de batterie de démarrage (2) adapté de façon à être connecté en parallèle audit système de batterie de puissance (1) par l'intermédiaire de ladite unité de coupe-circuit, cette unité de coupe-circuit pouvant être commutée entre un état ouvert et un état fermé, et, dans ce dernier état, ledit système de batterie de démarrage (2) étant adapté de façon à délivrer de l'énergie audit système électrique,
**caractérisé en ce que** le procédé comprend :
- la génération d'un signal de tension y₁ et l'acheminement d'un signal de tension y, par l'intermédiaire d'une connexion de verrouillage d'allumage, vers ledit circuit de verrouillage d'allumage,
- le contrôle d'un signal de tension y venant de ladite connexion de verrouillage d'allumage et la génération d'un signal de contrôle en fonction dudit signal de tension y contrôlé,
- la comparaison du signal de contrôle à au moins un critère de détection prédéterminé et la génération d'un signal de commande en fonction de ladite comparaison, et
- la commutation de ladite unité de coupe-circuit en fonction dudit signal de commande.

11. Procédé selon la revendication 10, grâce auquel un critère de détection comprend le fait que le signal de contrôle diffère d'une valeur de signal prédéterminée, et, si le critère de détection est satisfait, l'unité de coupe-circuit est commutée dans l'état fermé.

12. Procédé selon la revendication 10 ou 11, grâce auquel ledit signal de tension y₁ comprend une tension alternative.

13. Procédé selon l'une quelconque des revendications 10 à 12, qui comprend le contrôle d'un signal de tension y₂ venant dudit système de batterie de puissance (1), la comparaison de celui-ci à une valeur de seuil prédéterminée T_{y2}, et, si ledit signal de tension y₂ est supérieur ou égal à la valeur de seuil T_{y2}, la désactivation de ladite unité de signal, de telle sorte qu'aucun premier signal de tension y₁ ne soit généré.

14. Procédé selon l'une quelconque des revendications 10 à 13, qui comprend la mesure de la période de temps t pendant laquelle l'unité de coupe-circuit est fermée, et la commutation de ladite unité de coupe-circuit dans un état ouvert lorsque le temps t dépasse une valeur de seuil prédéterminée Tₜ.

15. Produit de programme informatique comprenant des instructions de programme informatique pour permettre à un système informatique dans un véhicule d'exécuter des étapes selon le procédé selon l'une quelconque des revendications 10 à 14 lorsque ces instructions sont exécutées sur ledit système informatique.

16. Produit de programme informatique selon la revendication 15, dans lequel les instructions de programme informatique sont mémorisées sur un support qui peut être lu par un système informatique.
